# EUROPEAN PATENT SPECIFICATION

(11) **EP 4 604 139 B1**
(45) Date of publication and mention of the grant of the patent: **23.09.2026**
(21) Application number: 24382169.1
(22) Date of filing: 19.02.2024
(51) Int. Cl.: G21C 19/10, B66C 1/10, G21C 19/07

(54) **FUEL ELEMENT INSERT HANDLING TOOL AND AND METHOD OF REMOVING AND INSERTING AN INSERT**
WERKZEUG ZUR HANDHABUNG EINES BRENNELEMENTEINSATZES UND VERFAHREN ZUM ENTFERNEN UND EINSETZEN EINES EINSATZES
OUTIL DE MANIPULATION D'INSERT D'ÉLÉMENT COMBUSTIBLE ET PROCÉDÉ DE RETRAIT ET D'INSERTION D'UN INSERT

(43) Date of publication of application: 20.08.2025
(73) Proprietor: Enusa Industrias Avanzadas, S.A., 28040 Madrid (ES)
(72) Inventor: BLANCO GONZÁLEZ, Daniel, 28040 Madrid (ES); JIMÉNEZ GONZÁLEZ, Oscar, 28040 Madrid (ES)
(74) Representative: Elzaburu S.L.P.

(56) References cited:
- ES-A2- 2 541 877
- WIKIPEDIA CONTRIBUTORS: "Bayonet mount", WIKIPEDIA, 4 February 2024 (2024-02-04), pages 1 - 7, XP093150443, Retrieved from the Internet <URL:https://en.wikipedia.org/w/index.php?title=Bayonet_mount&oldid=1203397161> [retrieved on 20240411]

## Description

### Technical field of the invention

The present invention concerns the energy sector. In particular, it relates to a solution for managing an insert of a fuel element arranged in a spent nuclear fuel storage pool.

### Background to the invention

Currently nuclear power plants have a nuclear fuel storage area. This area, also called a pool as it is covered with water, is configured for the temporary storage of nuclear fuel, either spent because of its previous use or that new fuel intended to recharge a shutdown reactor.

The fuel elements used are still radioactive and emit heat; therefore, when they are removed from the reactor, they must be temporarily stored in said storage pool before being sent for reprocessing and final storage. The waste heat emitted by the fuel elements after the reactor shutdown must be evacuated, which means that the spent fuel storage pool must be constantly cooled.

The spent fuel pool is designed for long-term storage. For this purpose, the bottom of the pools is equipped with a storage rack formed by different units, called cells, giving rise to a grid with a height of more than 4 metres, which are used for the storage of the new fuel elements or extracted from the reactor, arranged so as to avoid a critical situation through a nuclear chain reaction.

Each of the cells comprises an upper inlet, which allows the vertical containment of a fuel element, where said fuel elements can in turn have multiple components or inserts, among which plugs or nuclear poisons can be highlighted.

A flow plug, simplified to a plug, is an insert whose function is to reduce the flow of coolant through the fuel element guide tubes. The plug consists of a head comprising a plate from which hang fingers, generally 24 fingers of short length, about 100 - 150 mm. Said plug comprises a handle, formed by a central body and two arms, arranged perpendicular to the central body, giving rise to a T-handle, contacting in the centre of the upper part of the plate.

The poison is an insert with a plug-like head (plate, T-handle and fingers), where some of its fingers have a length greater than several metres, 3.5 - 4 m. Its function, in addition to sealing the guide tubes as well as the plug device, is to act as a neutron poison to control the reactivity in the reactor core. The greater length of its fingers generates the possibility of twisting this element, which translates into greater complexity when moving this insert.

Currently, these components are moved to other fuel elements with tools configured to handle said components from the vertical of the fuel element in which they are stored. These tools have a capture system with the ability to move the components vertically when they are removed from the fuel element. These tools are used suspended from a crane outside the pool which, once the initial fuel insert has been extracted, allows it to be moved through the pool and without extracting it from the water to the vertical of the receiving fuel element.

For example, patent application ES2541877A2 relates to a tool that is designed to move spent nuclear fuel assemblies inside the cells of a storage pool.

However, despite the fact that the tools for these movements need to be suspended in the vertical of the fuel element, there is a population of fuel elements that are in cells of the storage rack where there is no access from the vertical due to different blocking elements or obstacles existing in the installation (balcony-type structures, cooling pipes, etc.), preventing the use of the current tools.

This drawback represents a relevant limitation in the use of the complete rack of the installation. It is, therefore, necessary to develop a tool that allows access to the elements located in the cells without vertical access in a fuel storage pool, thus avoiding the limitation existing in the tools of the state of the art.

### Summary of the invention

The object of the present invention is to provide a solution relating to a handling tool of components or inserts of fuel elements that are stored in positions of a cell of a storage rack without vertical access.

Unlike other known equipment, the tool of the present application comprises a support structure formed by a horizontal axis divided, by a mast, into two sections: a tool side and a counterweight side.

Said support structure preferably has an inverted T shape, where the horizontal axis is attached to a mast in the form of a vertical axis, which divides the axis into its two sections: the tool side, and the counterweight side.

In this way, according to each of the sections of said support structure, two fundamental elements of the tool can be differentiated, such as a capture system and a counterweight.

The capture system is arranged in a hanging manner on a vertical axis of the tool side and is configured to come into contact with the insert of the storage pool, while the counterweight can be moved along the counterweight side and is configured to balance the support structure according to whether or not there is an overload of use when moving the insert.

Specifically, said capture system comprises a body which can rotate around the vertical axis from which the capture system hangs, wherein an upper zone and a lower zone or base can be distinguished. Said body comprises an inverted J-shaped crevice, located in the lower zone. Thereby, the body is at least partially penetrable by an insert located in a storage pool.

The base or lower zone of the body of the capture system comprises a crevice adapted to the T-handle of the insert to be displaced. In this way, the crevice has a shape such that the T-handle of an insert can penetrate the body and be locked inside. To do this, the crevice presents:
a) a first zone, oriented in a vertical direction, that blocks the horizontal and/or rotational movement of the T-handle of a fuel element that penetrates the body of the capture system;
b) A second zone, oriented in a horizontal direction, which blocks the vertical movement of said penetrating T-handle, and
c) a third zone, oriented in a vertical direction, which again blocks the horizontal and/or rotational movement. Unlike the first zone, the third zone comprises a lower stop, which limits the downward shift of the penetrating element.

In this way, a blocking position of the penetrating element can be defined as that position where said element is arranged in the third zone of the crevice of the body of the capture system. In this locked position, the capture system can move the insert vertically inside the storage rack cell safely, and horizontally when the insert is outside the storage rack.

The capture system is attached to the tool side of the horizontal axis through a guide system. This guide system allows the capture system to be shifted. Said shifting comprises the horizontal movement along the tool side of said horizontal axis; vertical, both upward and downward, with respect to the horizontal axis; and rotational. That is, the body of the capture system is able to rotate around the vertical axis on which the capture system hangs.

To this end, the guide system of the capture system comprises a chassis, arranged parallel to the vertical axis on which the capture system hangs, defining an upper end and a lower end. Said chassis is attached to the body of the capture system through a means of lifting, configured to guide the vertical movement of the body of the capture system.

The guide system requires a means of hooking the chassis. Said hooking means is located at the upper end of the chassis, connecting said upper end of the chassis with the horizontal axis of the support structure. The hooking means can be shifted horizontally along the horizontal axis, enabling the horizontal shifting of the capture system horizontally in the storage pool, even to points where it is not vertically accessible due to the existence of blocking elements, such as balconies.

The guide system comprises at least one projection, configured to be inserted into a slot located in the upper inlet of the storage rack cell prior to the penetration of the crevice by the T-handle of the head. At least one projection has an elongated structure with a length greater than the height of the T-handle. In this way, the projection can be used as a reference in the vertical shifting of the capture system once at least one projection is inserted into the insert head.

Additionally, the guide system comprises a means of rotation. Said rotation means is in connection with the body of the capture system and is configured to rotate said body around the vertical axis on which the capture system hangs.

Therefore, the tool according to the present invention comprises:
a) a support structure, preferably in the form of an inverted T
b) a capture system arranged in a hanging manner on the tool side,
c) a guide system for the capture system, and
d) a counterweight that can be moved along the counterweight side.

In a second aspect of the invention, the solution discloses a method of removing an insert, e.g. a plug or a poison, from a storage rack cell. Said insert comprises a head comprising a T-handle arranged at its top and a set of fingers hanging from said head.

Firstly, the method of removing an insert from a fuel element, which may or may not be stored in a vertically accessible position of the rack, comprises the following steps:
a) arranging a tool according to the present invention on a storage rack;
b) shifting the capture system so that the vertical axis of the capture system is on the fuel element stored in the cell of the insert to be removed;
c) inserting at least one projection into a crevice of the upper inlet of the storage rack cell;
d) inserting the arms of the T-handle of the insert into the first area of the crevice of the capture system;
e) rotating the capture system so that the arms of the T-handle travel through the second area of the crevice of the capture system;
f) locking the T-handle arms in the capture system once it has reached a safety position;
g) raising the capture system into a safe position together with the suspended insert
h) removing the tool, with the insert retained inside, from the fuel element stored in the storage rack cell.

Alternatively, the method of inserting and releasing an insert of a fuel element in a cell of a storage rack comprises the following steps:
a) arranging a locked insert in a safety position in a tool according to the present invention in a hanging manner over the storage rack;
b) moving the capture system so that the vertical axis of the capture system is on the fuel stored in the storage rack cell;
c) inserting at least one projection into a slot located in the upper inlet of the cell of the storage rack so that the capture system is fixed on the vertical of the cell;
d) lowering the capture system, inserting the insert into the fuel element located in the storage rack cell;
e) once the insert is inserted, unlocking the arms of the T-handle;
f) rotating the capture system so that the arms of the T-handle traverse the second crevice zone of the capture system; and
g) raising the capture system by releasing the insert fixed in the fuel element.

Thanks to this solution, it is possible to increase and even make possible the accessibility and manoeuvrability of the inserts stored in fuel elements located in a storage rack of a storage pool. The development of a removal and insertion tool and procedure that allows the use of cells without vertical access in a fuel storage pool is achieved, thus avoiding the existing limitation in the tools of the current state of the art.

It is therefore a great improvement of the facilities of the current storage pools where the updating and improvement of the facilities is extremely complex, due to the difficulty in modifying the initial design of the storage pool installation of the facilities already in operation.

In the figures of the present invention, reference is made to the following set of elements:
- 1: tool
- 2: support structure
- 3: horizontal axis
- 4: mast
- 5: tool side
- 6: counterweight side
- 7: capture system
- 8: rotating body
- 9: crevice
- 10: first zone
- 11: second zone
- 12: third zone
- 13: chassis
- 14: lifting means
- 15: hooking means
- 16: output
- 17: means of rotation
- 18: counterweight (mobile)
- 19: comb
- 20: stop
- 21: control
- 22: guide system
- 100: Insert
- 101: Head
- 102: T-handle
- 103: T-handle arms
- 104: Fingers
- 200: Storage pool
- 201: Storage rack
- 202: Rack cell
- 203: Blocking element

### Brief description of the figures

Figure 1 shows a diagram of the arrangement of a tool on the storage rack where there is a blocking element that prevents vertical access to the racks.
Figure 2 shows an embodiment of the tool according to the present invention and a released plug-type insert.
Figure 3 shows a detail of the tool side of an embodiment of the tool where a locked plug-type insert is arranged.
Figure 4 shows an embodiment of the tool where a transported neutron poison type insert is arranged.
Figure 5 shows an embodiment of a guide system formed by a set of combs limiting the displacement of the fingers of a poison-type insert.
Figure 6 shows the steps of a process of locking an insert in the crevice of the body of the capture system: a) T-handle arm arranged in the first zone of the crevice of the capture system, b) T-handle arm arranged in the second zone of the crevice of the capture system, c) T-handle arm locked in the third zone of the capture system.
Figure 7 shows an embodiment of a control in a) rest position and b) activation position.

### Detailed description of the invention

The object of the present invention is to improve and enable the use of cells (202) that are difficult to access, or even without vertical access, of a storage rack (201) in a storage pool (200).

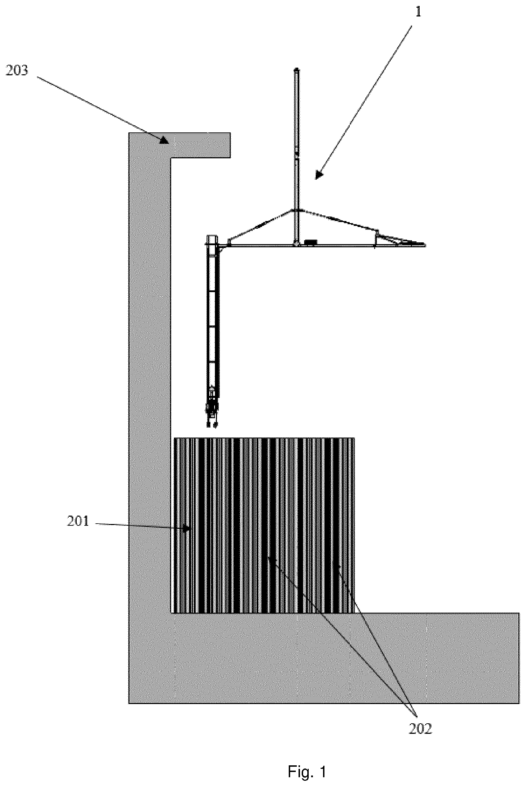

Specifically, the handling tool (1) of a component or insert (100) of a fuel element stored in a cell (202) of a storage rack (201) is shown in Figure 1. Examples of inserts (100) to be handled may be a nuclear poison, a flow plug, among others. The present invention provides the capacity for special access in those storage pools (200) that, by design, have some blocking element (203) such as, for example, a balcony, a set of pipes, etc., that limits vertical access to the storage rack cell.

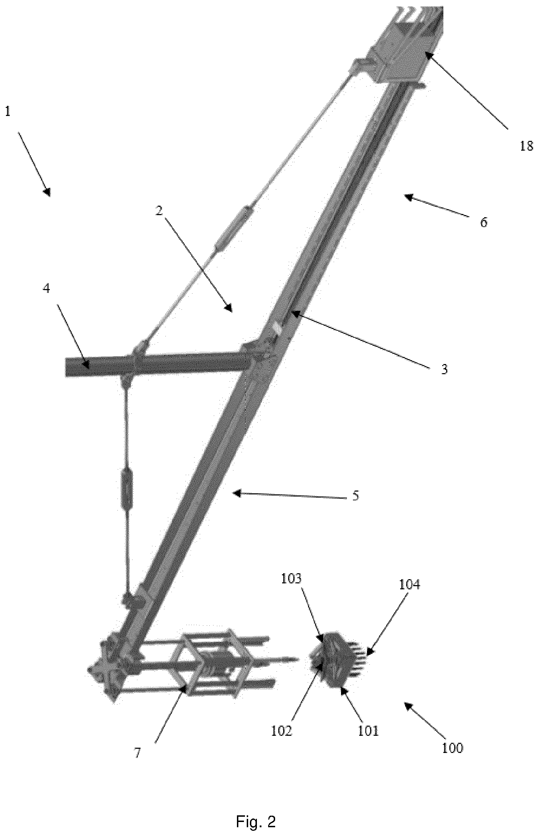

Figure 2 shows an embodiment of the tool (1) according to the present invention and a released plug insert (100). It can be seen how said insert (100) comprises a head (101) with a T-handle (102) arranged at its top, according to its direction in application, and a set of fingers (104), of variable number and length, hanging from said head (102). The T-handle (102) may thus comprise a main body and two arms (103) perpendicular to said main body of the T-handle (102).

According to the present invention, the tool (1) comprises: a support structure (2), a capture system (7), a guide system (22) of the capture system (7), and a counterweight (18).

Firstly, the support structure (2) comprises a mast (4) and a horizontal axis (3) divided into two sections: a tool side (5) and a counterweight side (6). Said support structure (2) is configured to be located at a height higher than the storage rack (201) and support the rest of the elements of the tool (1) that will interact with said rack (201).

In a preferred embodiment, as shown in Figure 1, the support structure (2) comprises a horizontal axis (3) attached to a mast (4), preferably resulting in an inverted T-shaped support structure (2). In this embodiment, the two sections of the support structure (2) - tool side (5) and counterweight side (6) - are arranged one on each side of said mast (4), being joined at the top of the horizontal shaft (3).

In addition, said support structure (2) may comprise other elements to increase the safety of the system, such as winches attachable from the mast (4) to the horizontal axis (3).

The advantage of having a mast (4) is the adaptability to the shifting means or cranes (204) currently available in storage pools (200). As a result, a mast (4) superiorly adaptable to a pre-existing crane (204) of the storage pool (200) significantly reduces the impact on incorporating the tool (1) in the installation of a storage pool (200).

For its part, the capture system (7) is arranged in a hanging manner on a vertical axis of the tool side (5) of the support structure (2) of the tool (1). The capture system (7) can be shifted horizontally, along the tool side (5) of said horizontal axis (3), and vertically, in an area lower than the horizontal axis (3).

The capture system (7) comprises a rotating body (8), preferably cylindrical, which distinguishes between an upper zone and a base or lower zone of the rotating body (8). Additionally, said rotating body (8) of the capture system (7) comprises an inverted J-shaped crevice (9) located in said base, wherein said crevice (9) is penetrable by the T-handle (102) of the insert (100). Its inverted J-shape can be divided into three sections: a first zone (10), a second zone (11) and a third zone (12).
- The first zone (10) is oriented in a vertical direction and configured to block the horizontal and/or rotational movement of a T-handle (102) that, in use, penetrates the rotating body (8) of the capture system (7).
- The second zone (11) is oriented in a horizontal direction, configured to block the vertical movement of a T-handle (102) that has penetrated the first zone (10) of the rotating body (8) of the capture system (7).
- Finally, the third zone (12) is again oriented in a vertical direction, blocking the horizontal and/or rotational movement of a T-handle (102) that has penetrated the second zone (11). Said third zone (12) comprises a lower stop (20), that is, a solid means configured to limit the downward movement of the penetrating T-handle (102).

By means of this crevice (9), the capture system (7) allows locking the head (101) of an insert (100) which allows a safe lifting and shifting of an insert (100) arranged in a cell (202) of a storage rack (201). Similarly, the controlled movement and lowering of an insert (100) outside the cell (202) of the storage rack (201) during its insertion and release process is achieved.

The tool (1) also comprises a movable counterweight (18), that is, said counterweight (18) is movable along the counterweight (6) side of the support structure (2) of the tool (1). In this way, thanks to the presence of a counterweight (18), the tool (1) can be balanced as the elements on the tool side (5) move.

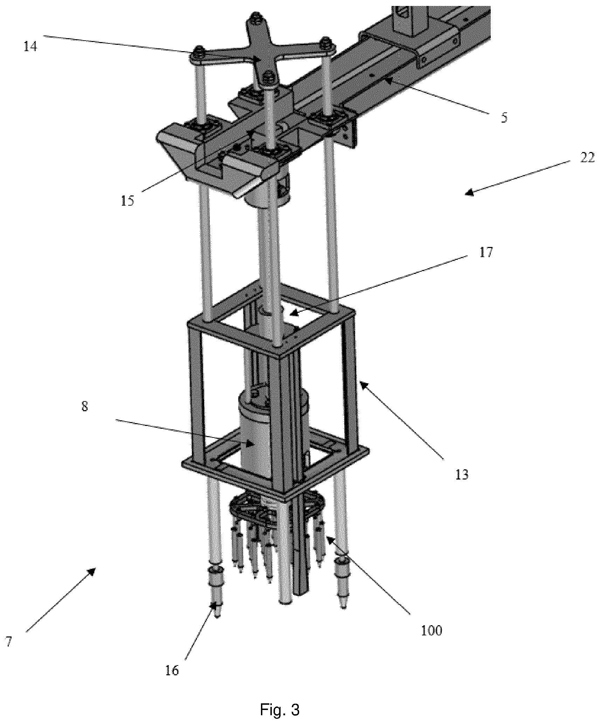

To achieve the movement of the capture system (7), the tool (1) further comprises a guide system (22) of the capture system (7). Said guide system (22) of the capture system (7) comprises: a chassis (13), a lifting means (14), a hooking means (15), a projection (16) and a means of rotation (17). For a better visualization of these elements, Figure 3 shows a detail of the tool side (5) of an embodiment of the tool (1) where a blocked plug-type insert (100) is arranged in the crevice (9) of the capture system (7).

The chassis (13) of the guide system (22) is arranged parallel to the vertical axis from which the capture system (7) hangs, in the direction of the storage rack (201) with respect to the horizontal axis (3). In this way, an upper end can be seen, located in the vicinity of the horizontal axis (3), and a lower end, oriented, in use, towards the storage rack (201) present at a lower level.

The chassis (13) is mechanically attached to the rotating body (8) of the capture system (7) through a lifting means (14). Said lifting means (14) is configured to guide the vertical movement of said rotating body (8) comprised in the capture system (7). The chassis (13) and the capture system (7) collect the safety system that prevents the accidental rotation thereof and prevents the release of the transported insert.

Among the safety elements, the capture system (7) can comprise a fixing means, preferably in the form of a ring, located inside the rotary body, being movable from a rest position and an activation position, where the activation position is a position such that it allows to press the T-handle (102) once it is locked in the safety position of the third zone (12) of the crevice (9). In this way, the ring improves manoeuvrability by a user of this equipment by ensuring the position of the handle in a position of greater safety. In this way, the T-handle (102) is blocked not only laterally by the walls of the crevice (9) and at the bottom by the stop (20), but also at the top by this fixing means. In an alternative embodiment, the ring shape can be replaced or adapted to the rotating body (8) and its elements. Thus, in a specific embodiment, the fixing means can be chosen according to the insert to be handled.

In a particular embodiment, the chassis (13) may further comprise an attachment element configured to insert and fix the end of the arms (103) of the T-handle (102) of the insert (100). Thus, in those solutions where the end of the arm (103) of the T-handle (102) protrudes from the rotary body (8), said end can be secured in this attachment element, arranged in the chassis (13) of the capture system. Similar to other previous components, the joining element improves the operability of the tool by the user.

The hooking means (15) of the chassis (13) connects the upper end of the chassis (13) with the horizontal axis (3) of the support structure (2). Said hooking means (15) is horizontally movable along said horizontal axis (3), enabling the tool (1) to move the horizontal capture system (7), accessing cells of the rack that it would otherwise not be possible to access.

The guide system (22) of the tool (1) comprises at least one projection (16). Said projection (16) is located at the lower end of the chassis (13) of the guide system (22), configured to be inserted into a slot located at the upper inlet of the cell (202) of the storage rack (201). In this way, the projection (16), once inserted into the slot, blocks the capacity of the guide system (22) to rotate. As can be seen in Figure 3, preferably, the projection (16) is the lowest dimension, in use, of the assembly formed by the tool (1) and the insert (100), thus allowing the stability and/or fix the chassis (13) of the guide system (22) to be improved, for the subsequent vertical displacement of the insert (100). Additionally, in a particular embodiment, the guide system (22) comprises two projections (16) arranged diametrically to the capture system (7). These projections (16) can be pin-type projections, which comprise a substantially cylindrical configuration.

In addition, the guide system (22) of the tool (1) comprises a rotation means (17). Said rotation means (17) is connected to the rotating body (8) of the capture system (7) and allows the rotating body (8) to be rotated around the vertical axis on which the capture system (7) hangs.

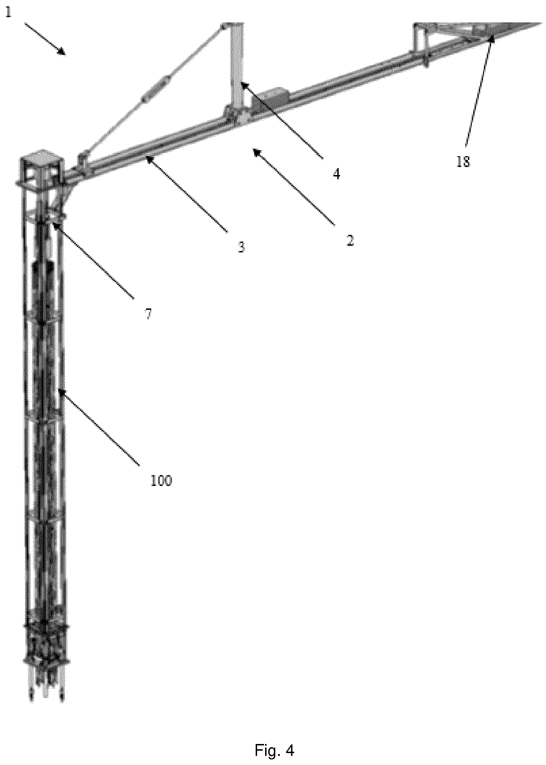

Figure 4 shows an embodiment of the tool (1) where a poison-type insert (100) is arranged blocked in the crevice (9), i.e. in a safety position for transport. The displacement of a poison insert (100) involves greater complexity given the length of the fingers existing in this type of insert (100).

Therefore, in this Figure 4, an embodiment with a chassis (13) adapted to this type of insert (100) can be seen. The existence of a chassis (13) with a length much greater than that required by a plug-type insert (100) as seen in Figure 2 and Figure 3 can be seen.

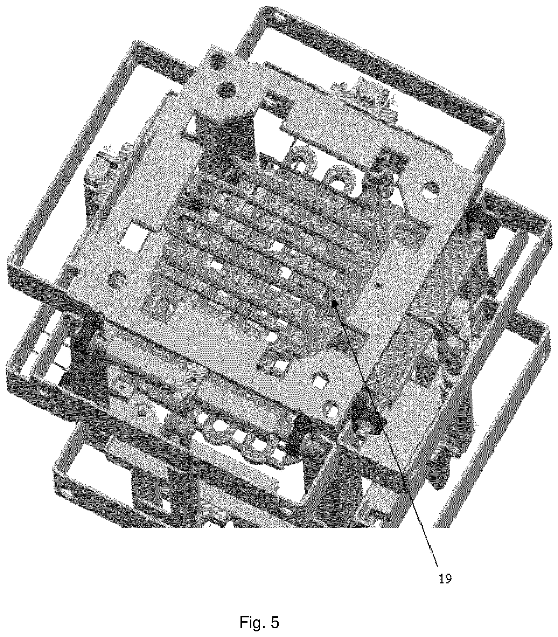

The chassis (13) may also comprise at least one set of guide combs (19) along its length. The function of this set of combs (19), as can be seen in Figure 5, is to limit the shifting of the fingers of a high-length insert (100), such as those existing in a poison-type insert (100). In a preferred embodiment, the chassis (13) comprises a set of four guide combs (19), forming holes penetrable by the fingers of the insert (100). Said combs (19) are visible by the user of the tool so that said user can visually verify that the fingers (104) of the insert (100) penetrate the spaces of the appropriate set of combs (19). Despite the existence of at least one set of combs (19), a space is available such that a descent and ascent of the insert (100) is allowed, including a slight rotation of the fingers (204) that facilitates the vertical movement of the insert (100).

It is noted that the storage pools (200) usually have cooling water on the storage rack (201), that is, it is of underwater application where the T-handle (102) of the head (101) of the insert (100) can be at a lower level even at the upper end of the cell (202), then the locking of the T-handle (102) can be carried out "blind" by the user.

To improve its application, in a preferred embodiment, the capture system (7) of the tool (1) further comprises a control (21) indicating the arrangement of the head (101) in the capture system (7) to the user of said tool (1). In this way, said control (21) allows visual reference for the user of the tool (1) that confirms whether the arms (103) of the T-handle (102) have been correctly locked in the crevice (9) of the capture system (7).

In a second aspect of the invention, the invention relates to a method of removing and inserting an insert (100) of a fuel element stored in a cell (202) of a storage rack (201).

Firstly, the method of removing an insert (100) comprises the following steps:
a. arranging a tool (1) on a storage rack (201);
b. moving the capture system (7), so that the vertical axis of the capture system (7) is above the fuel element stored in the cell (202) of the insert (100) to be removed;
c. inserting at least one projection (16) into a slot located in the upper inlet of the cell (202) of the storage rack (201);
d. inserting the arms (103) of the T-handle (102) into the first zone (10) of the crevice (9) of the capture system (7);
e. rotating the capture system (7) so that the arms (103) of the T-handle (102) travel through the second zone (11) of the crevice (9) of the capture system (7);
f. locking the arms (103) of the T-handle (102) in the capture system (7);
g. raising the capture system (7) together with the locked insert (100); and
h. removing the fuel cell element insert (100) (202) from the storage rack (201).

The capture system (7) can rest, once at least one projection (16) has been inserted on the head (101) of the fuel element.

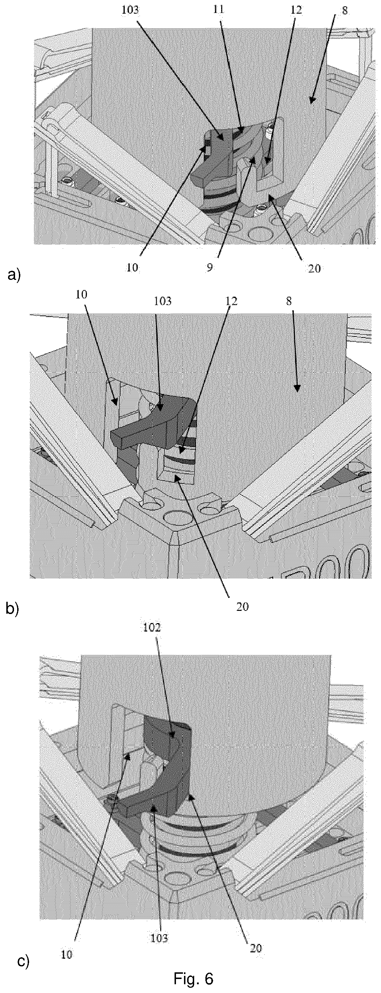

Figure 6 shows a process of locking an insert (100) in the crevice (9) of the rotating body (8) of the capture system (7). Specifically, steps d, e, and f disclosed in this process can be seen.

In a first image, Figure 6a, step d) is presented where the arms (103) of the T-handle (102) of a head (101) of said insert (100) are arranged in the first zone (10) of the crevice (9) of the capture system (7). As indicated above, this first zone (10) is configured to limit the horizontal or rotational movement of the head (101), i.e. it only allows a vertical movement, either upwards or downwards.

Once the first zone (10) is crossed, step e) takes place, where the arms (103) access the second zone (11) and can perform a horizontal rotation, as can be seen in Figure 6b. With this movement they cross the second zone (11) and reach the third zone.

Finally, Figure 6c, the insert (100) is blocked in step f). For this purpose, the arms (103) move to the third zone (12) where the movement is again limited to a vertical movement. Unlike the first zone (10), the third zone (12) comprises a stop (20) on which the arms (103) of the insert rest, being locked.

Thus, in a preferred embodiment of the process of removing the insert, in addition to the displacement of the capture system (7) of step b, the movable counterweight (18) is positioned so that the tool is slightly unbalanced towards the tool side (5). This compensates for the unevenness generated by inserting at least one projection (16) in the slot located in the upper inlet of the cell (202). If it is not sufficiently balanced, the existing imbalance will be solved by moving the counterweight (18) from the counterweight side (6).

The movement of the counterweight (18) can also be used during the removal of the insert (100) disclosed in step h, since when raising the capture system (7) together with the locked insert (100), it can slightly slope towards the tool side (5).

Similarly, the present invention discloses a method of inserting and releasing an insert (100) of a fuel element stored in a cell (202) of the storage rack (201). Said insertion method comprises the following steps.
a) arranging an insert (100) locked in a tool (1) in a hanging manner on the storage rack (201);
b) horizontally moving the capture system (7) so that the vertical axis of the capture system (7) is above the fuel element stored in the cell (202) of the storage rack (201);
c) inserting at least one projection (16), in a balanced manner, into a slot located in the upper inlet of the cell (202) of the storage rack (201);
d) lowering the capture system (7), inserting the insert (100) into the cell (202) of the storage rack (201);
e) unlocking the arms (103) of the T-handle (102);
f) rotating the capture system (7) so that the arms (103) of the T-handle (102) travel through the second zone (11) of the crevice (9) of the capture system (7); and
g) raising the capture system (7) by releasing the insert (100) fixed in the cell (202).

During the insertion method of the insert (100) it may also require the levelling of the tool (1) by adjusting the counterweight (18). In a preferred embodiment of the method, the movement of the capture system (7) to be located on the cell (202) can be carried out so that the tool is slightly unbalanced towards the tool side (5). In the same way as during the removal method, due to the support with the fuel element, a slope is generated towards the counterweight side (6), which can be counteracted by moving the counterweight (18). Once levelled, the user of the tool (1) can lower the capture system (7), visually controlling the entry of the fingers (104).

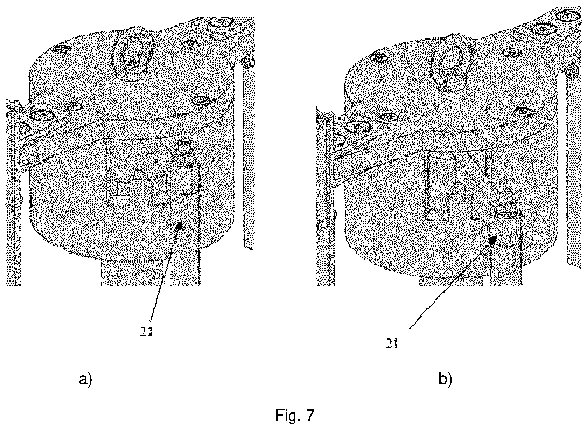

As can be seen in Figure 7, the control (21) is movable between a resting position (a), corresponding to the locking of the arms (103) in the crevice (9), and an activated position (b), corresponding to a released configuration of said arms (103).

Thus, in a preferred embodiment, where the capture system (7) comprises a control (21), it is activated, or reaches the activation position, when the crevice (9) of the capture system (7) abuts the upper part of the insert (100), i.e., when the arms (103) reach the second zone (11) of the crevice (9). In the same way as the arms (103) in the second zone (11) of the crevice (9), the control (21) can rotate in the activation position.

By correctly locking the T-handle (102), the control (21) returns to the resting position, which allows the user to perform subsequent manoeuvres in the assurance that the insert (100) is locked in the capture system (7). That is, a user would not initiate subsequent movements such as, for example, the raising of the capture system (7), whilst the control (21) is not in the resting position, since the activated position of this control (21) would be an indication that the arms (103) of insert (100) are still in the second zone (11) and moving them could generate a danger to the installation.

Therefore, in a preferred embodiment, the method of removing and inserting an insert comprises in its step of locking the insert, the control of said locking through the determination of the position of the control (21) by a user of the tool (1).

## Claims

1. An insert handling tool of a fuel element stored in a storage cell with an upper inlet, wherein said insert (100) comprises a head (101) and a set of fingers (104) hanging from said head (101), wherein said head (101) comprises a T-handle (102) arranged in its upper part, and said handling tool (1) comprises:
a) a support structure (2) comprising a horizontal shaft (3) divided into a tool side (5) and a counterweight side (6) by a mast (4);
b) a capture system (7), arranged in a hanging manner on a vertical axis of the tool side (5) of the support structure (2) of the tool (1), movable horizontally along the tool side (5) of said horizontal axis (3) and vertically in an area lower than the horizontal axis (3), wherein said capture system (7) comprises:
∘ a rotating body (8) comprising an upper area, a base, and an inverted J-shaped crevice (9), located in said base, penetrable by the T-handle (102) of the insert (100), wherein said crevice (9) comprises:
▪ a first zone (10), oriented in a vertical direction, configured to block the horizontal and/or rotational movement of a T-handle (102) that, in use, penetrates the crevice (9) of the rotating body (8) of the capture system (7);
▪ a second zone (11), oriented in horizontal direction, configured to block the vertical movement of a T-handle (102) that, in use, penetrates the first zone (10) of the crevice (9) of the rotating body (8) of the capture system (7), and
▪ a third zone (12), oriented in the vertical direction, that blocks the horizontal and/or rotational movement of a T-handle (102) that, in use, penetrates the second zone (11) of the crevice (9) of the rotating body (8), where the third zone (12) comprises a lower stop (20) configured to limit the downward movement of the T-handle (102);
c) a guide system (22) of the capture system (7) comprising:
∘ a chassis (13) arranged parallel to the vertical axis, comprising an upper end and a lower end, wherein said lower end comprises at least one projection (16), configured to be inserted into a slot located in the upper inlet of the cell (202) of the storage rack (201),
∘ lifting means (14), mechanically attached to the chassis (13) and to the rotating body (8) of the capture system (7), configured to guide the vertical movement of said rotating body (8) of the capture system (7),
∘ a hooking means (15) of the chassis (13), horizontally movable along the horizontal axis (3), which connects the upper end of the chassis (13) of the guide system (22) with said horizontal axis (3),
∘ a means of rotation (17), in connection with the rotating body (8) of the capture system (7), configured to rotate said rotating body (8) of the capture system (7) about the vertical axis on which the capture system (7) hangs; and
d) a counterweight (18) movable along the counterweight side (6) of the support structure (2) of the tool (1).

2. The tool according to claim 1, wherein the guide system (22) comprises a hollow interior space configured to contain the rotating body (8) of the capture system (7) and allow its vertical movement.

3. The tool according to any one of claims 1 and 2, wherein the body of the capture system is cylindrical.

4. The tool according to any one of claims 1 to 3, wherein the guide system comprises at least one set of combs (19) at the lower end, configured to limit the movement of the fingers (104) of the insert (100).

5. The tool according to any one of claims 1 to 4, wherein the horizontal axis of the support structure (2) is attached at the top to a mast (4).

6. The tool according to claim 5, wherein the mast (4) is arranged at the top to a pre-existing horizontal crane (205) of a storage pool (200).

7. The tool according to any one of claims 1 and 6, wherein the capture system (7) further comprises a control (21).

8. A method of removing an insert from a fuel element stored in a cell of the storage rack wherein said insert comprises a head comprising a T-handle arranged at its top and a set of fingers hanging from said head, **characterised in that** said method comprises the following steps:
a) arranging a tool (1) according to any one of claims 1 - 7, on a storage rack (201);
b) moving the capture system (7) so that the vertical axis of the capture system (7) is above the fuel element stored in the cell of the insert (100) to be removed;
c) inserting at least one projection (16) into a slot located in the upper inlet of the cell (202) of the storage rack (201);
d) inserting the arms (103) of the T-handle (102) into the first zone (10) of the crevice (9) of the capture system (7);
e) rotating the capture system (7) so that the arms (103) of the T-handle (102) travel through the second zone (11) of the crevice (9) of the capture system (7);
f) locking the arms (103) of the T-handle (102) in the capture system (7);
g) raising the capture system (7) together with the insert (100) into a safety position; and
h) removing the fuel element insert (100) stored in the cell (202) of the storage rack (201).

9. A method of inserting and releasing an insert of a fuel element stored in a cell of the storage rack, wherein said insert comprises a head comprising a T-handle arranged at the top and a set of fingers hanging from said head, **characterised in that** said method comprises the following steps:
a) arranging an insert (100) locked in a safety position in a tool (1), according to any one of claims 1 to 7, in a hanging manner on the storage rack (201);
b) moving the capture system (7) so that the vertical axis of the capture system (7) is above the fuel element stored in the cell (202) of the storage rack (201);
c) inserting at least one projection (16) into a slot located in the upper inlet of the cell (202) of the storage rack (201);
d) lowering the capture system (7), inserting the insert (100) into the fuel element stored in the cell (202) of the storage rack (201);
e) unlocking the arms (103) of the T-handle (102);
f) rotating the capture system (7) so that the arms (103) of the T-handle (102) travel through the second zone (11) of the crevice (9) of the capture system (7); and
g) raising the capture system (7) by releasing the insert (100) fixed in the fuel element stored in the cell (202).

## Patentansprüche

1. Werkzeug zur Handhabung eines Brennelementeinsatzes, der in einer Lagerzelle mit einem oberen Einlass gelagert ist,
wobei der Einsatz (100) einen Kopf (101) und einen Satz von Fingern (104) umfasst, die von dem Kopf (101) hängen, wobei der Kopf (101) einen T-Griff (102) umfasst, der in seinem oberen Teil angeordnet ist, und das Handhabungswerkzeug (1) umfasst:
a) eine Stützstruktur (2), die eine horizontale Achse (3) umfasst, die durch einen Mast (4) in eine Werkzeugseite (5) und eine Gegengewichtsseite (6) unterteilt ist;
b) ein Aufnahmesystem (7), das hängend auf einer vertikalen Achse der Werkzeugseite (5) der Stützstruktur (2) des Werkzeugs (1) angeordnet ist und horizontal entlang der Werkzeugseite (5) der horizontalen Achse (3) und vertikal in einem Bereich unterhalb der horizontalen Achse (3) beweglich ist, wobei das Aufnahmesystem (7) umfasst:
∘ einen Drehkörper (8), der einen oberen Bereich, eine Basis und einen umgekehrten J-förmigen Spalt (9) umfasst, der sich in der Basis befindet und durch den T-Griff (102) des Einsatzes (100) durchdringbar ist, wobei der Spalt (9) umfasst:
■ eine erste Zone (10), die in einer vertikalen Richtung ausgerichtet und dafür konfiguriert ist, die horizontale Bewegung und/oder Drehbewegung eines T-Griffs (102) zu blockieren, der bei Verwendung den Spalt (9) des Drehkörpers (8) des Aufnahmesystems (7) durchdringt;
■ eine zweite Zone (11), die in horizontaler Richtung ausgerichtet und so konfiguriert ist, dass sie die vertikale Bewegung eines T-Griffs (102) blockiert, der bei Verwendung die erste Zone (10) des Spalts (9) des Drehkörpers (8) des Aufnahmesystems (7) durchdringt, und
■ eine dritte Zone (12), die in der vertikalen Richtung ausgerichtet ist und die horizontale Bewegung und/oder die Drehbewegung eines T-Griffs (102) blockiert, der bei Verwendung die zweite Zone (11) des Spalts (9) des Drehkörpers (8) durchdringt, wobei die dritte Zone (12) einen unteren Anschlag (20) umfasst, der dafür konfiguriert ist, die Abwärtsbewegung des T-Griffs (102) zu begrenzen;
c) ein Führungssystem (22) des Aufnahmesystems (7), umfassend:
∘ ein Chassis (13), das parallel zur vertikalen Achse angeordnet ist und ein oberes Ende und ein unteres Ende umfasst, wobei das untere Ende mindestens einen Vorsprung (16) umfasst, der so konfiguriert ist, dass er in einen Schlitz eingeführt wird, der sich im oberen Einlass der Zelle (202) des Lagergestells (201) befindet,
∘ Hebemittel (14), das mechanisch am Chassis (13) und am Drehkörper (8) des Aufnahmesystems (7) befestigt und dafür konfiguriert ist, die vertikale Bewegung des Drehkörpers (8) des Aufnahmesystems (7) zu führen,
∘ ein Einhakmittel (15) des Chassis (13), das entlang der horizontalen Achse (3) horizontal beweglich ist und das obere Ende des Chassis (13) des Führungssystems (22) mit der horizontalen Achse (3) verbindet,
∘ ein Drehmittel (17) in Verbindung mit dem Drehkörper (8) des Aufnahmesystems (7), das dafür konfiguriert ist, den Drehkörper (8) des Aufnahmesystems (7) um die vertikale Achse zu drehen, an der das Aufnahmesystem (7) hängt; und
d) ein Gegengewicht (18), das entlang der Gegengewichtsseite (6) der Stützstruktur (2) des Werkzeugs (1) bewegbar ist.

2. Werkzeug nach Anspruch 1, wobei das Führungssystem (22) einen hohlen Innenraum umfasst, der dafür konfiguriert ist, den Drehkörper (8) des Aufnahmesystems (7) aufzunehmen und seine vertikale Bewegung zu ermöglichen.

3. Werkzeug nach einem der Ansprüche 1 und 2, wobei der Körper des Aufnahmesystems zylindrisch ausgebildet ist.

4. Werkzeug nach einem der Ansprüche 1 bis 3, wobei das Führungssystem mindestens einen Satz von Kämmen (19) am unteren Ende umfasst, der dafür konfiguriert ist, die Bewegung der Finger (104) des Einsatzes (100) zu begrenzen.

5. Werkzeug nach einem der Ansprüche 1 bis 4, wobei die horizontale Achse der Stützstruktur (2) oben an einem Mast (4) befestigt ist.

6. Werkzeug nach Anspruch 5, wobei der Mast (4) oben an einem bereits vorhandenen Horizontalkran (205) eines Lagerbeckens (200) angeordnet ist.

7. Werkzeug nach einem der Ansprüche 1 und 6, wobei das Aufnahmesystem (7) ferner eine Steuerung (21) umfasst.

8. Verfahren zum Entfernen eines Einsatzes aus einem Brennelement, das in einer Zelle des Lagergestells gelagert ist, wobei der Einsatz einen Kopf umfasst, der einen T-Griff, der an seiner Oberseite angeordnet ist, und einen Satz von Fingern, die von dem Kopf hängen, umfasst, **dadurch gekennzeichnet, dass** das Verfahren die folgenden Schritte umfasst:
a) Anordnen eines Werkzeugs (1) nach einem der Ansprüche 1 bis 7 auf einem Lagergestell (201);
b) Bewegen des Aufnahmesystems (7), so dass sich die vertikale Achse des Aufnahmesystems (7) über dem in der Zelle des zu entfernenden Einsatzes (100) gelagerten Brennelement befindet;
c) Einsetzen mindestens eines Vorsprungs (16) in einen Schlitz, der sich im oberen Einlass der Zelle (202) des Lagergestells (201) befindet;
d) Einsetzen der Arme (103) des T-Griffs (102) in die erste Zone (10) des Spalts (9) des Aufnahmesystems (7);
e) Drehen des Aufnahmesystems (7), so dass sich die Arme (103) des T-Griffs (102) durch die zweite Zone (11) des Spalts (9) des Aufnahmesystems (7) bewegen;
f) Verriegeln der Arme (103) des T-Griffs (102) in dem Aufnahmesystem (7);
g) Anheben des Aufnahmesystems (7) zusammen mit dem Einsatz (100) in eine Sicherheitsposition; und
h) Entfernen des in der Zelle (202) des Lagergestells (201) gelagerten Brennelementeinsatzes (100).

9. Verfahren zum Einsetzen und Freigeben eines Einsatzes eines in einer Zelle des Lagergestells gelagerten Brennelements, wobei der Einsatz einen Kopf umfasst, der einen an der Oberseite angeordneten T-Griff und einen Satz von an dem Kopf hängenden Fingern umfasst, **dadurch gekennzeichnet, dass** das Verfahren die folgenden Schritte umfasst:
a) Anordnen eines in einer Sicherheitsposition verriegelten Einsatzes (100) in einem Werkzeug (1) nach einem der Ansprüche 1 bis 7 hängend an dem Lagergestell (201);
b) Bewegen des Aufnahmesystems (7), so dass sich die vertikale Achse des Aufnahmesystems (7) über dem in der Zelle (202) des Lagergestells (201) gelagerten Brennelement befindet;
c) Einsetzen mindestens eines Vorsprungs (16) in einen Schlitz, der sich im oberen Einlass der Zelle (202) des Lagergestells (201) befindet;
d) Absenken des Aufnahmesystems (7), Einsetzen des Einsatzes (100) in das in der Zelle (202) des Lagergestells (201) gelagerte Brennelement;
e) Entriegeln der Arme (103) des T-Griffs (102);
f) Drehen des Aufnahmesystems (7), so dass sich die Arme (103) des T-Griffs (102) durch die zweite Zone (11) des Spalts (9) des Aufnahmesystems (7) bewegen; und
g) Anheben des Aufnahmesystems (7) durch Lösen des Einsatzes (100), der in dem in der Zelle (202) gelagerten Brennelement befestigt ist.

## Revendications

1. Un outil de manipulation d'insert d'un élément combustible stocké dans une cellule de stockage avec une entrée supérieure,
dans lequel ledit insert (100) comprend une tête (101) et un ensemble de doigts (104) suspendus à ladite tête (101), dans lequel ladite tête (101) comprend une poignée en T (102) disposée dans sa partie supérieure, et ledit outil de manipulation (1) comprend :
a) une structure de support (2) comprenant un arbre horizontal (3) divisé en un côté outil (5) et un côté contrepoids (6) par un mât (4) ;
b) un système de capture (7), disposé de manière suspendue sur un axe vertical du côté outil (5) de la structure de support (2) de l'outil (1), mobile horizontalement le long du côté outil (5) dudit axe horizontal (3) et verticalement dans une zone inférieure à l'axe horizontal (3), dans lequel ledit système de capture (7) comprend :
∘ un corps rotatif (8) comprenant une zone supérieure, une base et une crevasse en forme de J inversé (9), située dans ladite base, pouvant être pénétrée par la poignée en T (102) de l'insert (100), dans lequel ladite crevasse (9) comprend :
■ une première zone (10), orientée dans une direction verticale, configurée pour bloquer le mouvement horizontal et/ou rotatif d'une poignée en T (102) qui, en service, pénètre dans la crevasse (9) du corps rotatif (8) du système de capture (7) ;
■ une deuxième zone (11), orientée dans la direction horizontale, configurée pour bloquer le mouvement vertical d'une poignée en T (102) qui, en service, pénètre dans la première zone (10) de la crevasse (9) du corps rotatif (8) du système de capture (7), et
■ une troisième zone (12), orientée dans la direction verticale, qui bloque le mouvement horizontal et/ou rotatif d'une poignée en T (102) qui, en service, pénètre dans la deuxième zone (11) de la crevasse (9) du corps rotatif (8), la troisième zone (12) comprenant une butée inférieure (20) configurée pour limiter le mouvement vers le bas de la poignée en T (102) ;
c) un système de guidage (22) du système de capture (7) comprenant :
∘ un châssis (13) disposé parallèlement à l'axe vertical, comprenant une extrémité supérieure et une extrémité inférieure, dans lequel ladite extrémité inférieure comprend au moins une saillie (16), configurée pour être insérée dans une fente située dans l'entrée supérieure de la cellule (202) du rack de stockage (201),
∘ des moyens de levage (14), fixés mécaniquement au châssis (13) et au corps rotatif (8) du système de capture (7), configurés pour guider le mouvement vertical dudit corps rotatif (8) du système de capture (7),
∘ un moyen d'accrochage (15) du châssis (13), mobile horizontalement le long de l'axe horizontal (3), qui relie l'extrémité supérieure du châssis (13) du système de guidage (22) audit axe horizontal (3),
∘ un moyen de rotation (17), en connexion avec le corps rotatif (8) du système de capture (7), configuré pour faire tourner ledit corps rotatif (8) du système de capture (7) autour de l'axe vertical sur lequel le système de capture (7) est suspendu ; et
d) un contrepoids (18) mobile le long du côté contrepoids (6) de la structure de support (2) de l'outil (1).

2. L'outil selon la revendication 1, dans lequel le système de guidage (22) comprend un espace intérieur creux configuré pour contenir le corps rotatif (8) du système de capture (7) et permettre son mouvement vertical.

3. L'outil selon l'une quelconque des revendications 1 ou 2, dans lequel le corps du système de capture est cylindrique.

4. L'outil selon l'une quelconque des revendications 1 à 3, dans lequel le système de guidage comprend au moins un ensemble de peignes (19) à l'extrémité inférieure, configuré pour limiter le mouvement des doigts (104) de l'insert (100).

5. L'outil selon l'une quelconque des revendications 1 à 4, dans lequel l'axe horizontal de la structure de support (2) est fixé au sommet à un mât (4).

6. L'outil selon la revendication 5, dans lequel le mât (4) est disposé au sommet d'une grue horizontale préexistante (205) d'une piscine de stockage (200).

7. L'outil selon l'une quelconque des revendications 1 et 6, dans lequel le système de capture (7) comprend en outre une commande (21).

8. Un procédé de retrait d'un insert d'un élément combustible stocké dans une cellule du rack de stockage, dans lequel ledit insert comprend une tête comprenant une poignée en T disposée à son sommet et un ensemble de doigts suspendus à ladite tête, **caractérisé en ce que** ledit procédé comprend les étapes suivantes consistant à :
a) disposer un outil (1) selon l'une quelconque des revendications 1 à 7 sur un rack de stockage (201) ;
b) déplacer le système de capture (7) de sorte que l'axe vertical du système de capture (7) est au-dessus de l'élément combustible stocké dans la cellule de l'insert (100) à retirer ;
c) insérer au moins une saillie (16) dans une fente située dans l'entrée supérieure de la cellule (202) du rack de stockage (201) ;
d) insérer les bras (103) de la poignée en T (102) dans la première zone (10) de la crevasse
(9) du système de capture (7) ;
e) faire tourner le système de capture (7) de sorte que les bras (103) de la poignée en T (102) se déplacent à travers la deuxième zone (11) de la crevasse (9) du système de capture (7) ;
f) verrouiller les bras (103) de la poignée en T (102) dans le système de capture (7) ;
g) élever le système de capture (7) avec l'insert (100) dans une position de sécurité ; et
h) retirer l'insert d'élément combustible (100) stocké dans la cellule (202) du rack de stockage (201).

9. Un procédé d'insertion et de libération d'un insert d'un élément combustible stocké dans une cellule du rack de stockage, dans lequel ledit insert comprend une tête comprenant une poignée en T disposée au sommet et un ensemble de doigts suspendus à ladite tête, **caractérisé en ce que** ledit procédé comprend les étapes suivantes consistant à :
a) disposer un insert (100) verrouillé dans une position de sécurité dans un outil (1), selon l'une quelconque des revendications 1 à 7, de manière suspendue sur le rack de stockage (201) ;
b) déplacer le système de capture (7) de sorte que l'axe vertical du système de capture (7) est au-dessus de l'élément combustible stocké dans la cellule (202) du rack de stockage (201) ;
c) insérer au moins une saillie (16) dans une fente située dans l'entrée supérieure de la cellule (202) du rack de stockage (201) ;
d) abaisser le système de capture (7), insérer l'insert (100) dans l'élément combustible stocké dans la cellule (202) du rack de stockage (201) ;
e) déverrouiller les bras (103) de la poignée en T (102) ;
f) faire tourner le système de capture (7) de sorte que les bras (103) de la poignée en T (102) se déplacent à travers la deuxième zone (11) de la crevasse (9) du système de capture (7) ; et
g) élever le système de capture (7) en retirant l'insert (100) fixé dans l'élément combustible stocké dans la cellule (202).
